# EUROPEAN PATENT SPECIFICATION

(11) **EP 0 881 584 B1**
(45) Date of publication and mention of the grant of the patent: **20.08.2003**
(21) Application number: 96902433.0
(22) Date of filing: 14.02.1996
(51) Int. Cl.: G06F 17/50, G06T 17/50, H04Q 7/34

(54) **METHOD AND APPARATUS FOR MANAGING POINT/ZONE INFORMATION**
VERFAHREN UND EINRICHTUNG UM PUNKT/ZONE-INFORMATION ZU VERWALTEN
METHODE ET DISPOSITIF DE GESTION D'INFORMATIONS POINT/ZONE

(43) Date of publication of application: 02.12.1998
(73) Proprietor: Athena Telecom Lab, Inc., Koganei-shi, Tokyo 184 (JP)
(72) Inventor: KAMIMURA, Kunio, Tokyo 184 (JP)
(74) Representative: Desrousseaux, Grégoire Marie
(86) International application number: JP9600313
(87) International publication number: WO97030406

(56) References cited:
- JP-A- 4 032 971
- JP-A- 4 077 873
- JP-A- 6 187 396
- CLEMENTINI E ET AL: "A SPATIAL DATA MODEL UNDERLYING HUMAN INTERACTION WITH OBJECT-ORIENTED SPATIAL DATABASES" PROCEEDINGS OF THE INTERNATIONAL COMPUTER SOFTWARE AND APPLICATIONS CONFERENCE. ( COMPSAC ),US,LOS ALAMITOS, IEEE. COMP. SOC. PRESS, vol. CONF. 15, 11 September 1991 (1991-09-11), pages 110-117, XP000260528
- VAN OOSTEROM P ET AL: "AN OBJECT-ORIENTED APPROACH TO THE DESIGN OF GEOGRAPHIC INFORMATION SYSTEMS" COMPUTERS AND GRAPHICS,GB,PERGAMON PRESS LTD. OXFORD, vol. 13, no. 4, 1989, pages 409-418, XP000141885 ISSN: 0097-8493

## Description

### TECHNICAL FIELD

### Section 1 Technical Field

This invention relates to the method and apparatus for managing point and zone data.

### BACKGROUND ART

### Section 2 Prior Art

There are many systems utilizing point and zone data. For example. systems for managing or planning a communications network require data that specify the places of the communication bases (communication nodes), in other words, points. Generally, it is common that data of a communication base are coordinates on its map. Traditional systems for planning communications networks, for example "Towards a more efficient network design works" Okabe, Hiroshi. NTT Technical Journal Vol.4, No. 12 pp 40-41 (1992), aim at calculating the number of circuits that link communication bases. Therefore. a way of supplying data of points of the communication bases does not become a problem.

### Section 3 Problems and Issues

However, ways of supplying data on points or zones become important issues, in the following situations. When a system for making a model of communication networks, that is a system for designing a communications network plan, handles various tasks concerning communication bases, such as the decision making of introducing new Communication bases, as wall as the deletion of communication bases. These issues are listed below.
(Issue 1] The traditional method in which the model of a communication base carries data on its map coordinates has the following actual problems. (1) In the case that more than one communication base lies on the same point, it is necessary to set the same data to each communication base separately. (2) It is necessary to compare data of each point in order to determine whether they lie on the same point or not. (3) When a communication base is deleted, the information on a point or a zone is lost.
[Issue 2] If the points and zones and the relationships among them change, it is often necessary to make drastic changes to the model of a communications network which has already been made.
[Issue 3] There is no apparatus or method reported, which enables us to vaguely specify points and zones at the early stage of making the model of a communications network, and to redefine them in detail in accordance with the progress of the model making.
[Issue 4] When introducing a new communication base, it is necessary to check whether it is included in a specified zone. Suppose that the service-supplying zone (service zone) of a communications network is specified beforehand. Circuit cannot be supplied, if communications bases are not included in the zone. Another case is the charge for an international circuit. The charge of an international circuit is determined from a combination of cities (or zones of cities with their outskirts). Thus, cities or zones, to which communication bases of required circuit belong, determine the charge. Another case is a cover zone of transit communication base. A transit communication base of a hierarchical structure for a communications network is assigned a cover zone. A new communication base is put under the control of the transit communication base of which cover zone includes it. In order to make such a decision, the inclusion of a point and a zone must be made clear. No apparatus or method enabling it has been reported yet.
[issue 5] Besides the inclusion of a point and a zone, it is necessary to consider the adjacent relation and group relation among points and zones. As an example, there is a charging system applying the same price for communication in a zone and among adjacent zones. In order to calculate the exact charge of the circuit used by a model of a communication network, data on adjacent relations among zones is necessary. In some public communications networks, zones supplying circuits may be limited. It is possible to define such a combination of zones as a group.

This invention shows the method and apparatus for solving the issues mentioned above. Prior to this, there has not been a system for planning a communications network along with the necessity of each communication base. As a result, working on the plan of a communications network required many people. Furthermore, the plan of a communications network had to be remade repeatedly until it was able to meet with the necessary conditions. A method and apparatus for rationally managing point or zone data is needed in order to realize a system which can automatically make a model of a communications network, or a plan of a communications network with the various assigned conditions.

Though, the above explanation shows issues focusing on making plans of communications networks, this invention shows methods and apparatuses which can be widely applied to cases managing a point and a zone.

### DISCLOSURE OF THE INVENTION

### Section 4 Separation of Manager and User of Point and Zone Data

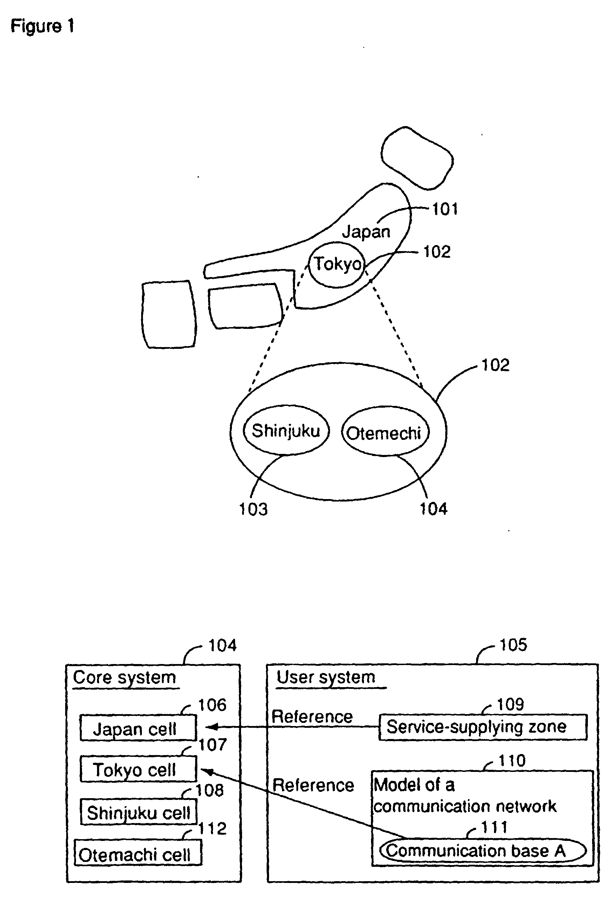

The first idea of this invention deals with the separation of the side that manages point and zone data, and the side that uses it. In this description, the former side is called "core system" 104, and the latter side is called "user system" 105 as shown in figure 1. In a conventional planning system of a communications network, point and zone data was kept inside of a model of a communications network. The core system and the user system were not separated. Issue 1 and Issue 2 were results of this.

### Section 4.1 Point/Zone Cell

A point/zone cell is made according to the point or zone to be considered, and is accommodated in the core system. A point/zone cell representing a specific point, such as "Tokyo" 102 can simply be called "Tokyo cell" 107.

A point/zone cell is a data block (a part of a memory unit, a group of memory elements, etc) which keeps data on a point or zone. The minimum data of point/zone cell is data to distinguish the point or zone it represents. This data can either be the name of the point or zone, or mark, sign, or number that distinguishes each point or zone. This is called "cell identifier." The phrase data on a point/zone cell simply refers to the additional data besides the cell identifier. Examples of the additional data will be explained later. Such data is not necessary for a point/zone cell and may be set up according to the needs of the user system.

Besides the data for distinguishing the point or zone it represents, a point/zone cell is able to record data unique to a point or zone. Some examples are longitude/latitude, XY-coordinates on a map, area of a zone, population, importance of securing communication, and etc.

A point/zone cell can hold data of relation between point or zone it represents and other points and zones. The relation between points or zones is represented by the reference between the point/zone cells they correspond to. (Details are explained later.)

### Section 4.2 Reference

When a point/zone cell is labeled X, the "referencing data" to X is data that specifies X. If the referencing data to X is available, X can be identified and accessed. The pointers of language C and language C++ are examples of referencing data. The cell identifier is also referencing data. If point/zone cells are accommodated on a list, the point/zone cell of specified referencing data can be identified by tracing the list in order and can be accessed. This list can be realized by a simple list, double linked list, an array, a hashed array, bags, a stack, a queue, a dictionary (a gathering of associations). A hashed array list arrays lists that accommodate objects with the same hash number. In other words, any method can be the method of accommodating a point/zone cell, if it provides a means to identify a point/zone cell by the cell identifier. If a point/zone cell is to be accommodated in an object oriented database, the relationship defined by the database is the referencing data.

To "set reference" means to set referencing data. Suppose that a certain point/zone cell X has Name X". And suppose "Name X" is used as the "referencing data" to X, that is the data to identify X. At this situation, to set point/zone cell Y a reference to X means to write down the character string "Name X" on Y. If a memory address is used as the referencing data, to set point/zone cell Y a reference to X means to write down the memory address of X on Y.

The term "reference" is simply a logical relation by setting referencing data. Therefore, tracing reference means taking access to a point/zone cell indicated by the referencing data. When more reference is set on a point/zone cell with prior reference, multiple point/zone cells can be accessed in order by tracing the references in succession.

### Section 4.3 Utilizing Core System

When the user system needs point or zone data, it sets reference to a point/zone cell. In the example of figure 1, a reference is set from Japan cell 106 to the service-supplying zone 109 of user system 105. This shows that the service-supplying zone is Japan 101. Reference is also set from communication base A 111 of the model of a communications network 110 to Tokyo cell 107. This shows that communication base A 111 is located in Tokyo 102.
Issue 1 is solved since point or zone data exists in a point/zone cell and since reference to a point/zone cell exists only in user system 105. Only one point/zone cell corresponding to a specific point or zone is necessary, if references are set to the same point/zone cell from multiple parts of a model of a communications network. To judge whether models of communications networks refer to same point or zone or not, we only check whether the same point/zone cell is referred or not. Revising the contents of just one point/zone cell revises data of certain point or zone. Even if a part of a communications network is deleted, data of point or zone is never lost. Suppose a model of a communications network has a reference to some point and zone. We just change the reference to another point/zone cell, if this model needs data of another point or zone.

Furthermore, even if a point or a zone is added, or when data stored by a point/zone cell is changed, the model of a communications network does not require any changes. Thus issue 2 is solved.

### Section 5 Relations among Point/Zone Cells

The second idea of this invention is to represent relations among points and zones by references among point/zone cells.

It is possible to judge the relation between point/zone cells, or the relation between points or zones which point/zone cells represent, by the reference between point/zone cells. When using several kinds of relations, we can introduce distinguishing labels of relations. These labels show kinds of relations. If there is only one kind of relation, the distinguishing label is unnecessary.

### Section 5. 1 Inclusion

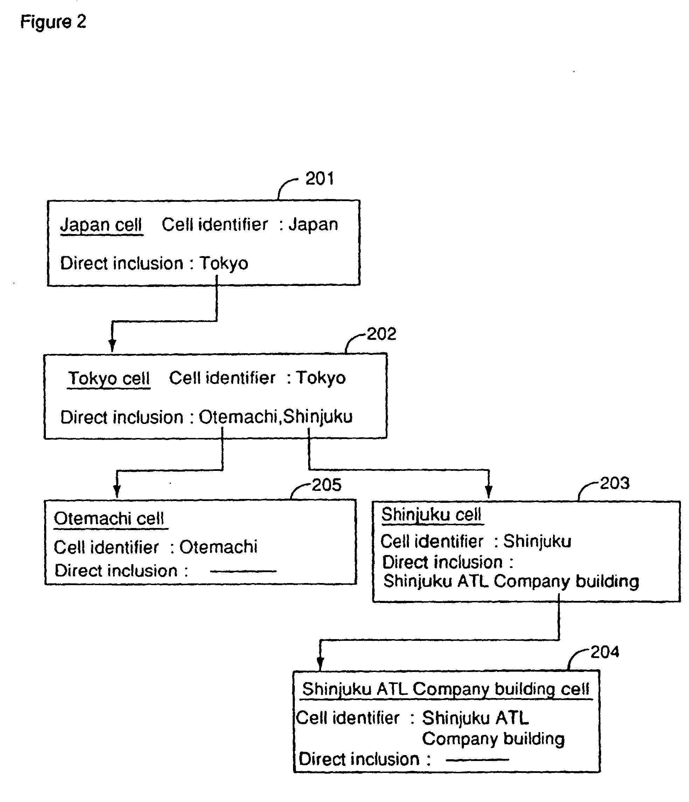

Figure 2 shows the method of expressing an inclusion.
[Direct inclusion]: For explanation, suppose that Tokyo cell 202 corresponds to Tokyo and Japan cell 201 corresponds to Japan. Since Tokyo is included in Japan, reference to Tokyo cell 202 is set at Japan cell 201. This relation or reference is a "direct inclusion." Thus, this reference shows that the Japan cell directly includes the Tokyo cell.
[Directly included relations]: Setting reference from Tokyo cell 202 to Japan cell 201 is another method of showing that Tokyo is included in Japan. This reference, a "directly included relations," is the opposite of a "direct inclusion."

As explained before, there is no need to set labels to these relations when only direct inclusions or directly included relations are used among point/zone cells. If there is one kind of relation, the opposite relations can be judged. In order to make the quick judgement of direct inclusion, it is possible to set both relations. The process to represent a direct inclusion or a directly included relation by reference is claim 5 (b).
[Inclusion]: The relation expressed by successive direct inclusions is called an inclusion. When Japan cell 201 directly includes Tokyo cell 202, and when Tokyo cell 202 directly includes Shinjuku cell 203, the Japan cell includes the Shinjuku cell. In cases where only directly included relations are set, these relations should be traced in reverse. If Japan cell 201 can be reached from Shinjuku cell 203 by tracing directly included relations in reverse, the Japan cell includes the Shinjuku cell.
[Reverse inclusion]: The opposite relation of an inclusion is called a "reverse inclusion."
[Process to investigate inclusion]: This is the process to investigate the relation of inclusion between designated point/zone cell. As an example of setting and using an inclusion, consider Tokyo cell 202, Otemachi cell 205 and Shinjuku cell 203 of figure 2. Since Tokyo includes Otemachi and Shinjuku, a direct inclusion from Tokyo cell 202 to Otemachi cell 203 is set, and a direct inclusion from Tokyo cell 202 to Shinjuku cell 203 is set. Tokyo cell 202 is treated as a point, when the Tokyo communication base, which is a node of communication network connecting places around the world, is located in Tokyo. However, when the Shinjuku communication base and the Otemachi communication base are inserted into the model of the communications network, Tokyo becomes a zone. Whether Tokyo is treated as a point or a zone is up to the intent of the user. Even if Shinjuku ATL Company building cell 204. which corresponds to the Shinjuku ATL building, is introduced, it is treated as a zone when the local communications network inside the building is regarded.

As explained above, the only difference between a point and a zone lies in the user intent. And this invention does not treat a point and a zone separately and makes both a point and a zone correspond to a point/zone cell

If there are direct inclusions (or directly included relations) among points and zones, we can investigate inclusions among points and zones by tracing them. Even if we add a point/zone cell, we are ready to investigate inclusion between any points or zones by setting reference between the added point/zone cell and point/zone cell that directly includes it.

This is a new and effective method of managing the inclusion of points and zones. The process of setting a direct inclusion is omitted at claim 4 because it is assumed that a direct inclusion set in advance is used.

In the system for making a model of a communications network, service-supplying zones of the communications network are specified in advance. For example, suppose that the service-supplying zone for a communications network of Company N is (all area of) Japan. To designate actually the zone of Japan into the computer is not an easy task. The process of designating all the points and zones in Japan and of inputting their data would require a great deal of labor, and would not be realistic. Even if it did work, there is a problem as follows.

Suppose that the process of making a model of a communications network finds out a lack of points and zones after all the data has been set. The addition of a point or a zone sometimes invalidates the effectiveness of the model of a communications network that is already made.

Another method to designate the zone of Japan into the computer is to display the map of Japan on the monitor. And an operator points a communication base above it. It would not be an easy task to make the computer judge the communication base is inappropriate when it is placed on a neighboring country being displayed in the corner of the map.

On the other hand, this invention requires for Japan cell 202 of figure 2 to be defined, and referred as a service-supplying zone for the communications network of Company N. In the case of figure 1, reference needs to be set from the service-supplying zone 109 (for the communications network of Company N) of user system 105 to Japan cell 106.

When Tokyo or Shinjuku becomes necessary as a communication base for another communications network, Tokyo cell 202 or Shinjuku cell 203 is defined and a direct inclusion is set. At this situation, the reference to the Japan cell 201 as a service-supplying zone for the communications network of Company N is not affected at all. The process to investigate inclusion will be invoked, when it is necessary to check there is inclusion between Japan cell 201 and Shinjuku cell 203 or not. This solves issue 3 and issue 4. The process to investigate inclusion is claim 4 and claim 5 (c).

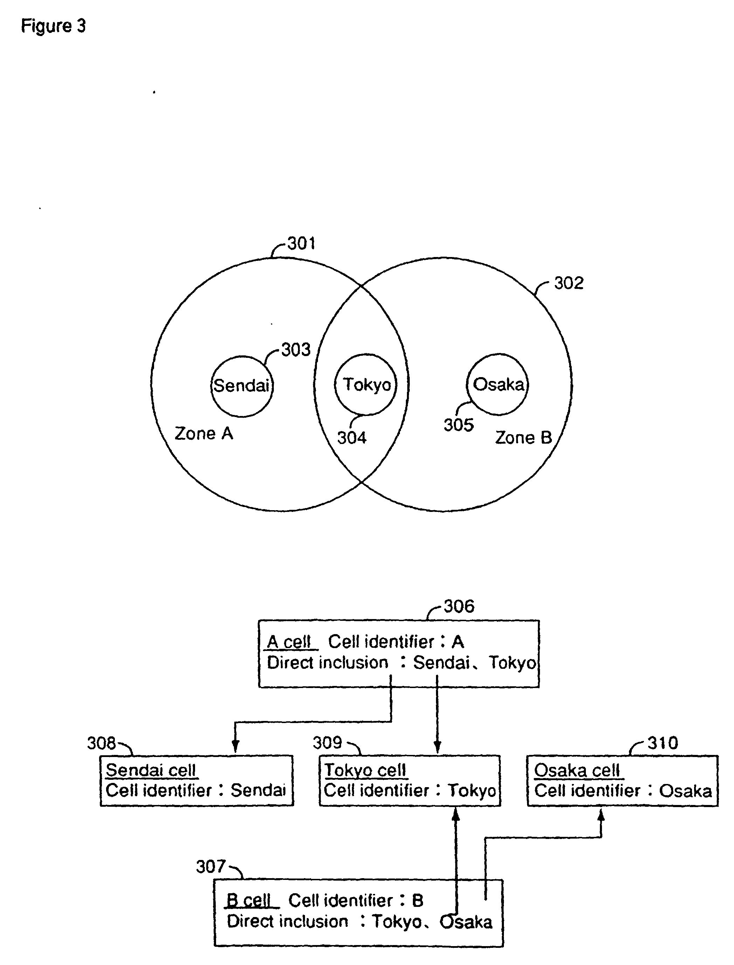

There are no problems for the core system even if the zones are layered, one over the other. Zone A 301 of figure 3, that is a zone defined by a private reason of ATL Company, includes Sendai 303 and Tokyo 304. Zone B 302, that is a zone defined by a private reason of ATL Company, includes Tokyo 304 and Osaka 305. Then, a direct inclusion is set from A cell 306 to Sendai cell 308 and Tokyo cell 309. A direct inclusion is set from B cell 307 to Tokyo cell 309 and Osaka cell 310. Inclusions can be represented in this way.

### Section 5.2 Adjacent Relation

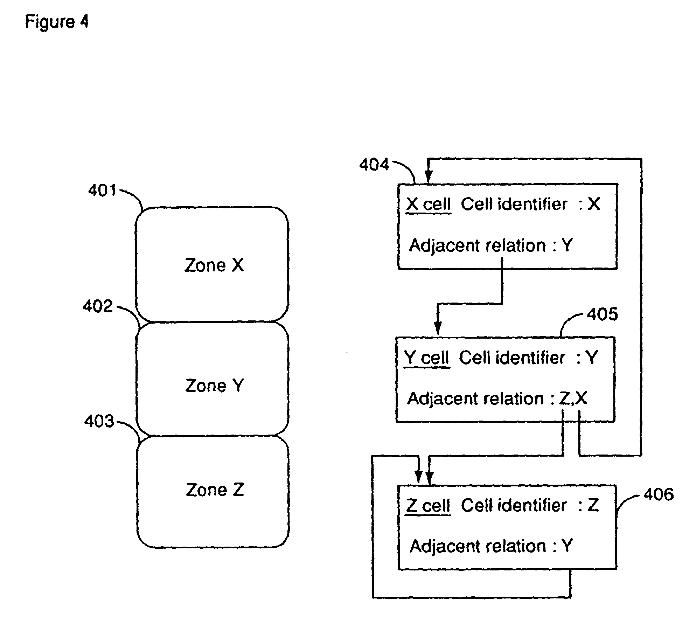

[Adjacent Relation]: Figure 4 is used for explanation. Suppose that zone X 401 corresponds to X cell 404, and zone Y 402 corresponds to Y cell 405. When zone X 401 is adjacent to zone Y 402, reference to X cell 404 is set at Y cell 405. The relation of this reference is an "adjacent relation." Thus, the reference represents that X cell and Y cell are adjacent to each other. The opposite reference, from X cell 404 to Y cell 404 may be set. This also represents an adjacent relation. Whether to set both references or to set one of the references may be decided according to where the emphasis is placed. Emphasis may be placed on the simplicity and quickness of process to investigate an adjacent relation, which will be explained later, or on the simplicity and quickness of process to set an adjacent relation and memory saving. Figure 4 shows an example in which both references are set.
[Process to investigate an adjacent relation]: This process judges whether designated point/zone cells are adjacent to each other by the existence of a reference. In some user systems, it is necessary to judge whether zones are adjacent to each other. For example, there may be cases where a discount is put on the charge of communication service among adjacent zones. Also, a discount may be put on a ticket between adjacent zone. It is difficult to designate all adjacent relations from the beginning. If new zone to be considered is added, there is no guarantee that evaluations that considered adjacent relations are still valid.

In this invention, a reference is set at first, from a user system to a point/zone cell needed by the user system. Whenever a new point/zone cell is added, adjacency relations with the existing point/zone cells are set. This is claim 6 (a). At this situation, the references from the user systems to the point/zone cells, which had already been set, are not affected at all. The process to investigate an adjacent relation will be invoked, when it is necessary to check there is an adjacent relation of point/zone cells to be considered This is claim 6 (b).

### Section 5.3 Group Relation

[Group Relation]: Suppose that zone R 501, zone S 502, and zone T 502 are zones where some communications network supplies communication service. The point/zone cells corresponding to them are R cell 506, S cell 507, and T cell 508. References showing a group relation are set among these point/zone cells. Reference may he set in either one direction or both directions Also, reference may be set from a point/zone cell to all the point/zone cells of the group, or reference may be set to (or from) the representative point/zone cell of this group. Details of the process to investigate a group relation differ according to these methods to setting references. This will be explained later. Emphasis may be placed on the simplicity and quickness of process to investigate an adjacent relation, which will be explained later, or on the simplicity and quickness of process to set an adjacent relation and memory saving. These ways to set references can be selected by the consideration that which is emphasized among the followings. The simplicity and quickness of the process to investigate a group relation is emphasized, or the quickness of setting a group relation and memory saving is emphasized.

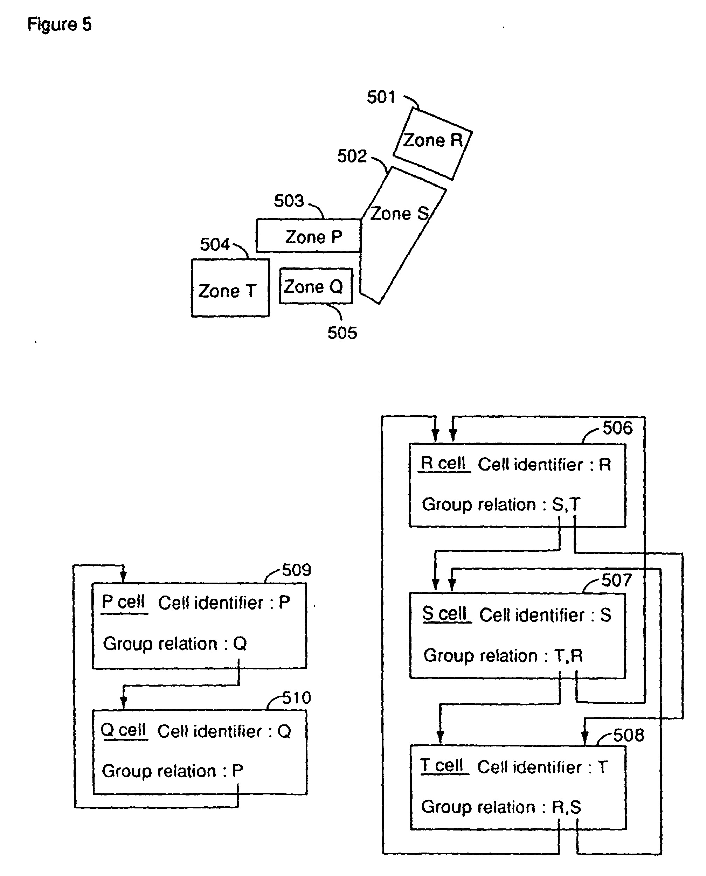

Figure 5 shows an example where reference can be set in both directions, from any point/zone cell to all the point/zone cells in a group. Reference is set from R cell 506 to S cell 507 and T cell 508, from S cell 507 to T cell 508 and R cell 506, and from T cell 508 to R cell 506 and S cell 507. [Process to investigate a group relation]: This is a process of judging whether a designated point/zone cell belongs to the same group according to "the existence of a reference, successively chaining references, or the existence of a reference to a representative point/zone cell."

Some user systems require the judgement of whether a zone belongs to a group. For example, when a communications network designates service-supplying zones, it also designates a combination of service-supplying zones where the charge for communication is discounted. Also, in some programs for calculating ticket price, sections where the price is discounted may be designated. There has not been a method to add zones according to the needs of the user system, instead of designating all zones in a group in the beginning.

However, in this invention, reference is set at first from the user system to the point/zone cells needed by the user system. Whenever a new point/zone cell is added, group relations are set with the already existing point/zone cells. This is claim 7 (a). At this situation, the references already set from the user system to the point/zone cells are not affected. The process to investigate a group relation will be invoked, when it is necessary to check there is a group relation of point/zone cells to be considered. This is claim 7 (h).

### Section 6 Unit Figure

The next idea of this invention is to designate a unit figure to a point/zone cell. This figure is a distinctive data of a point or a zone. It is difficult to concretely designate zones with complex shapes, but it is easy to designate zones with regular shapes such as circles, triangles, quadrilaterals, and hexagons. They are called "unit figures." The process of designating unit figure to a point/zone cell is claim 8.

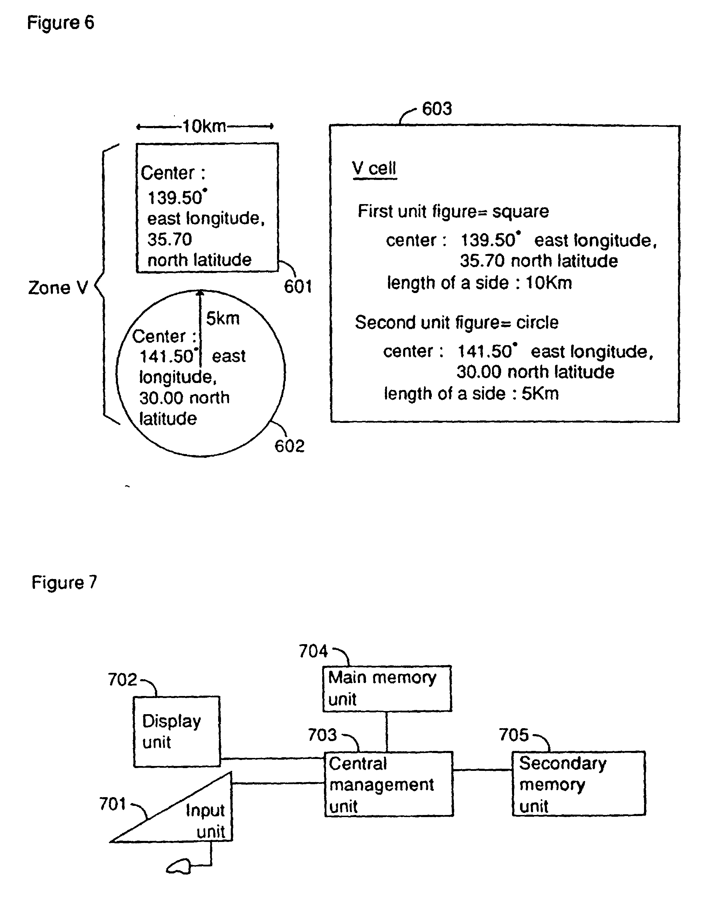

As shown in figure 6, zone V is composed of square 601 and circle 602. At this situation, the first unit figure and the second unit figure are designated as distinctive data of V cell 603. The first unit figure is a square, with the center at 139.50 degrees east longitude and 35.70 degrees north latitude, and with a side of 10 km. The second unit figure is a circle, with the center at 141.50 degrees east longitude and 30.00 degrees north latitude, with a radius of 5 km.

It is possible to approximately represent zones of complex shapes by designating multiple small unit figures. By designating such a shape as a rectangle, a triangle, or a hexagon as unit figure, it is possible to completely fill up a plane. Also, it is possible to treat space by using three-dimensional figures, such as a sphere, a triangular pyramid, a cube, or a octahedron.

Designating unit figures to point/zone cells as mentioned above can have the following effects. (1) By calculating the data of unit figures of already existing point/zone cells and the data of unit figures of additional point/zone cells, it is possible to judge the inclusion among point/zone cells. This is claim 9 (b). At this situation, as explained in Section 5.1 Inclusion, there is no need to designate directly the inclusion of a point or a zone. (2) By calculation, it is also possible to judge whether the zones are piled up, and to judge an adjacent relation.

### Section 7 Correspondence to Claims

By separating the part that manages point and zone data (the core system) and the part that uses it (the user system), it becomes possible to add and modify data of the core system, without affecting the reference from the user system. Claim 1 focuses on references from the model of a communications network.

[n addition to the separation of the core system and the user system. claim 2 designates a process that investigates the relations among points and zones. Reference is set from the user system to the point/zone cells at a convenient time of the user system. The relations among point/zone cells can he investigated when it is required by the user system. As long as it does not affect the references from the user system to the point/zone cells, it is possible to add and modify the data of the core system.

Claim 3 adds "the process of setting a reference which represents the relations among point/zone cells" to claim 2. A condition of this claim is to be able to set reference among point/zone cells without affecting the reference from the user system. Therefore, it is possible to add and modify the contents of the core system after setting reference from the user system. Claim 3 is also a base of claim 5, claim 6, and claim 7.

A characteristic of claim 4 is "the process of accepting the designation of a point/zone cell which corresponds to a point or a zone, tracing references among point/zone cells which shows a direct inclusion, and judging the inclusions among the designated point/zone cells." By entering a direct inclusion (or a directly included relation) of a point/zone cell and tracing them, it becomes possible to judge the inclusion among optional point/zone cells.

Claim 5 is a composition of claim 1 and claim 3, focuses on the inclusion of a point or a zone, and includes within its range the process of making a point/zone cell. It is possible to add and modify the data of the core system, which handles inclusions, without affecting references from the model of a communications network. Also, it is possible to judge the relations among any point/zone cells at a convenient time specified by the user system, which handles the model of a communications network.

Claim 6 is subordinate to claim 3, and focuses on the adjacent relations of a point or a zone. Claim 7 is subordinate to claim 3, and focuses on the group relations of a point or a zone. Claim 1, claim 2, claim 3, claim 4, claim 5, claim 6, claim 7, claim 8, and claim 9, claim methods. Their equivalent claims of apparatus are claim 10, claim 11, claim 12, claim 13, claim 14, claim 15, claim 16, claim 17, and claim 18.

### BRIEF EXAMINATION OF THE DRAWINGS

### Section 8 Brief Examination of the Drawings

Figure 1 is a drawing showing the relations among a point or a zone, point/zone cells, the core system, and the user system. Figure 2 shows an example of an inclusion through a direct inclusion of point/zone cells. Figure 3 shows an example of an inclusion where the point/zone cells are piled up Figure 4 shows an example of an adjacent relation among point/zone cells Figure 5 shows an example of a group relation among point/zone cells. Figure 6 is an example of designating unit figures.

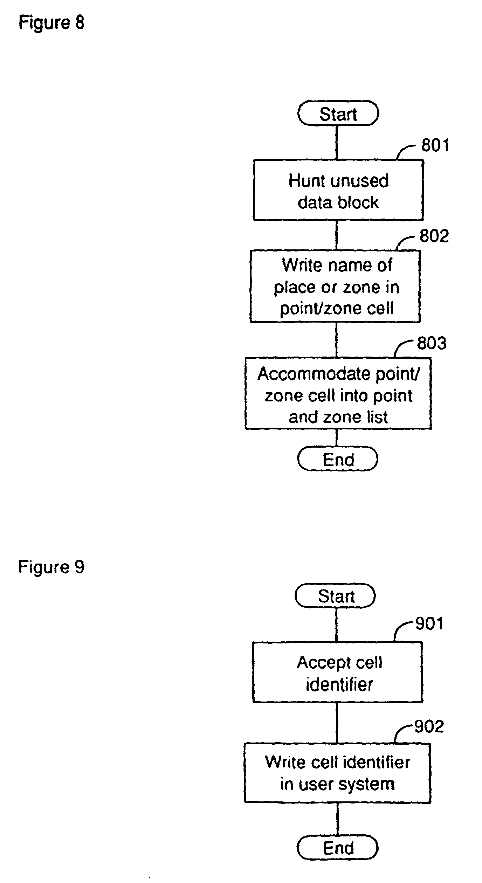

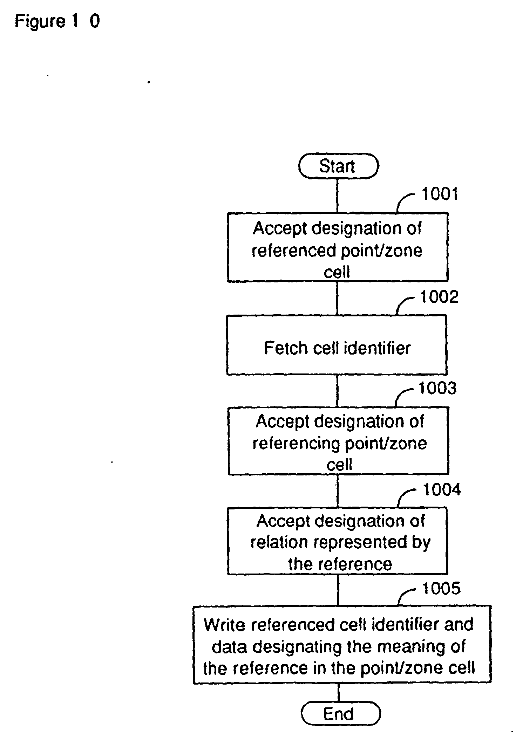

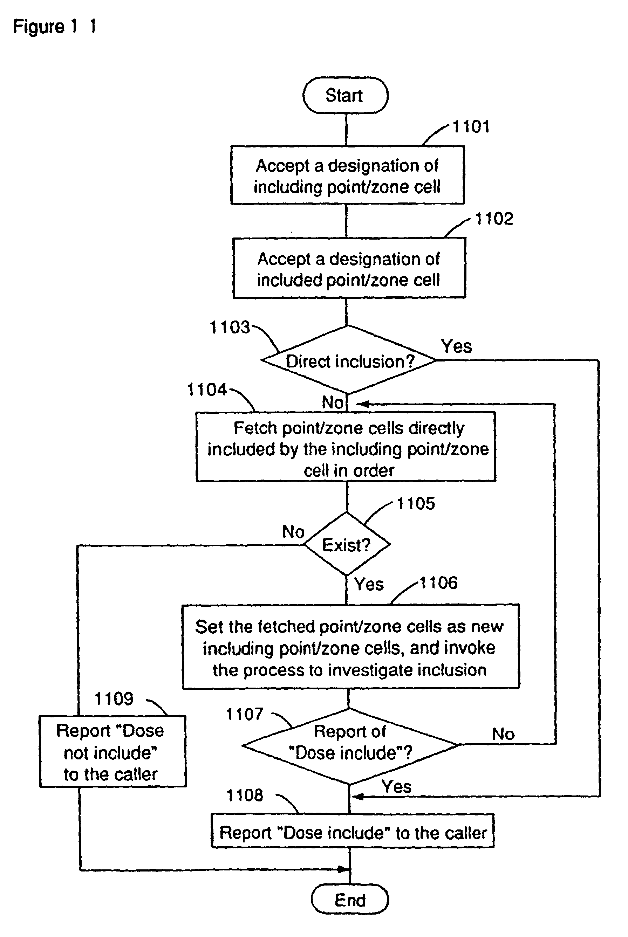

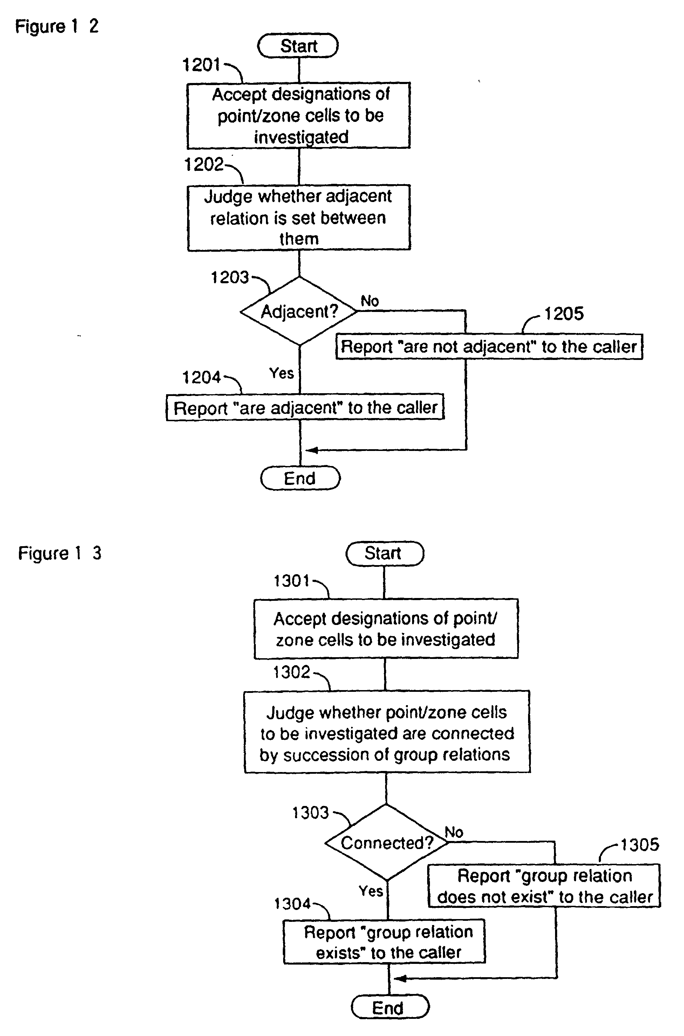

Figure 7 is a common composition of a computer running a program that realized the methods of managing point and zone data. Figure 8 is an embodiment of the process of making a point/zone cell. Figure 9 is an embodiment of the process of setting reference from the user system Figure 10 is an embodiment of the process of setting reference among point/zone cells. Figure 11 is an embodiment of the process to investigate inclusion. Figure 12 is an embodiment of the process to investigate an adjacent relation.

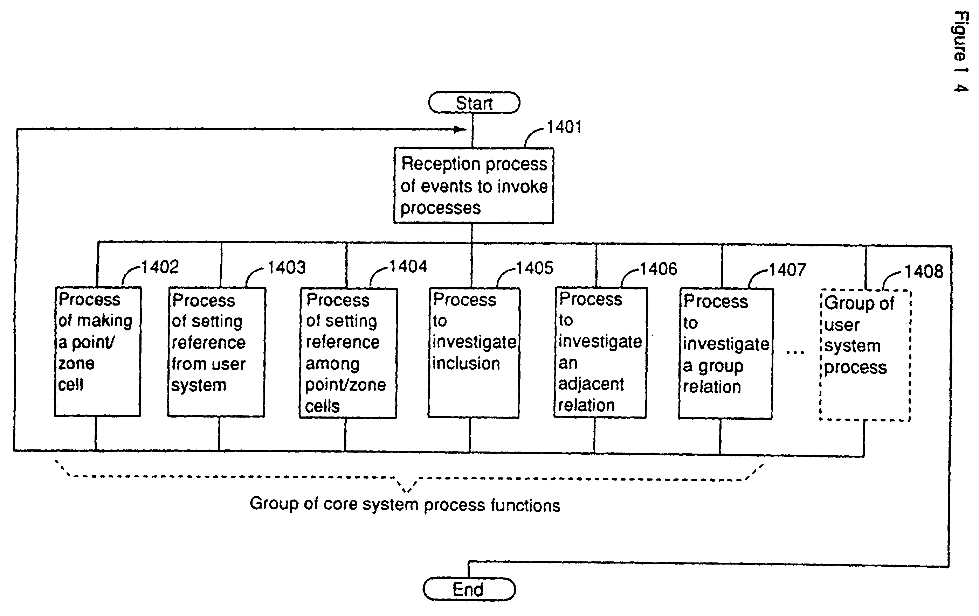

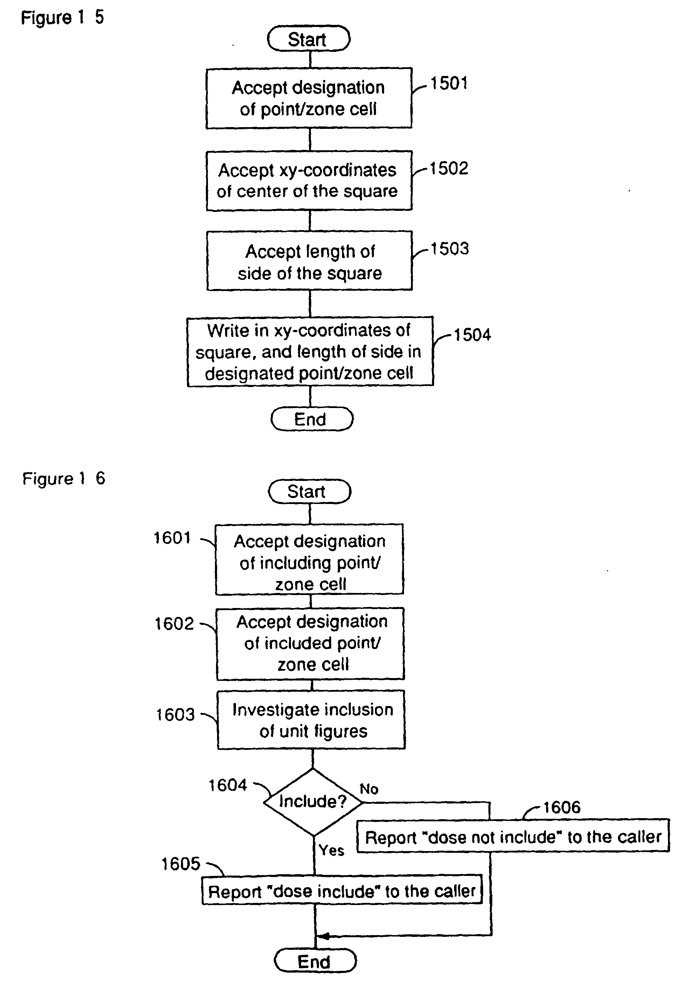

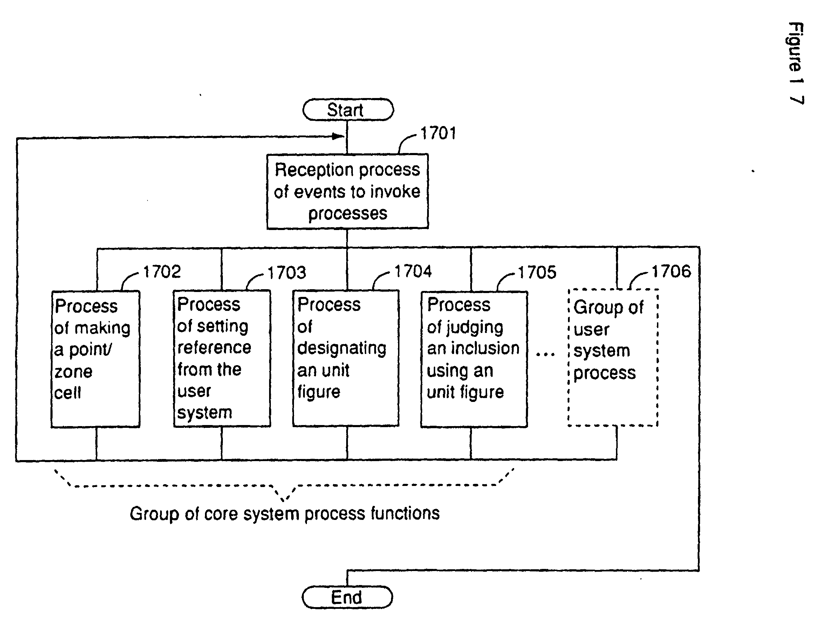

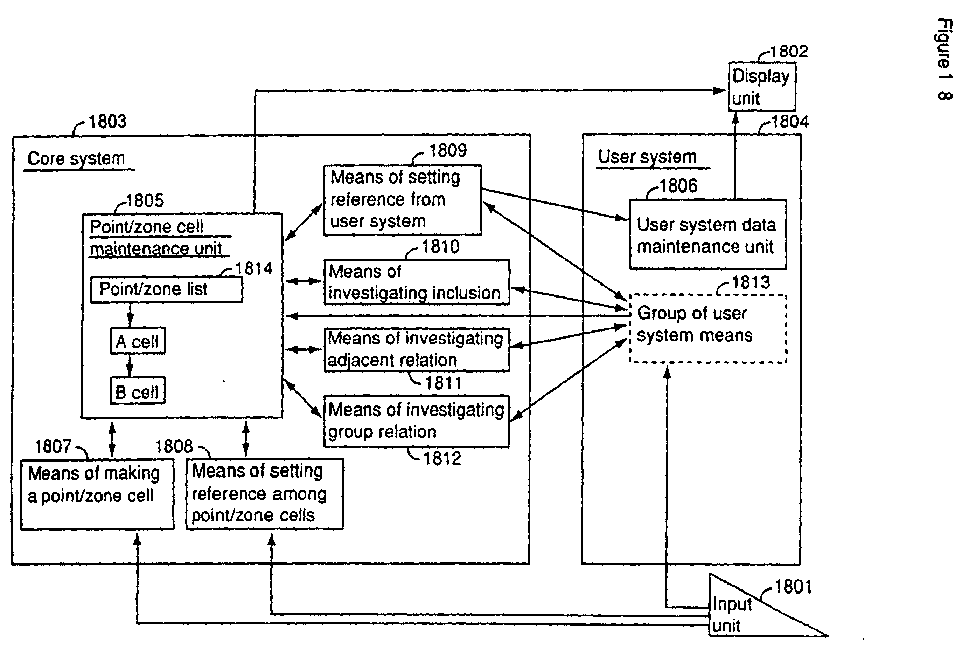

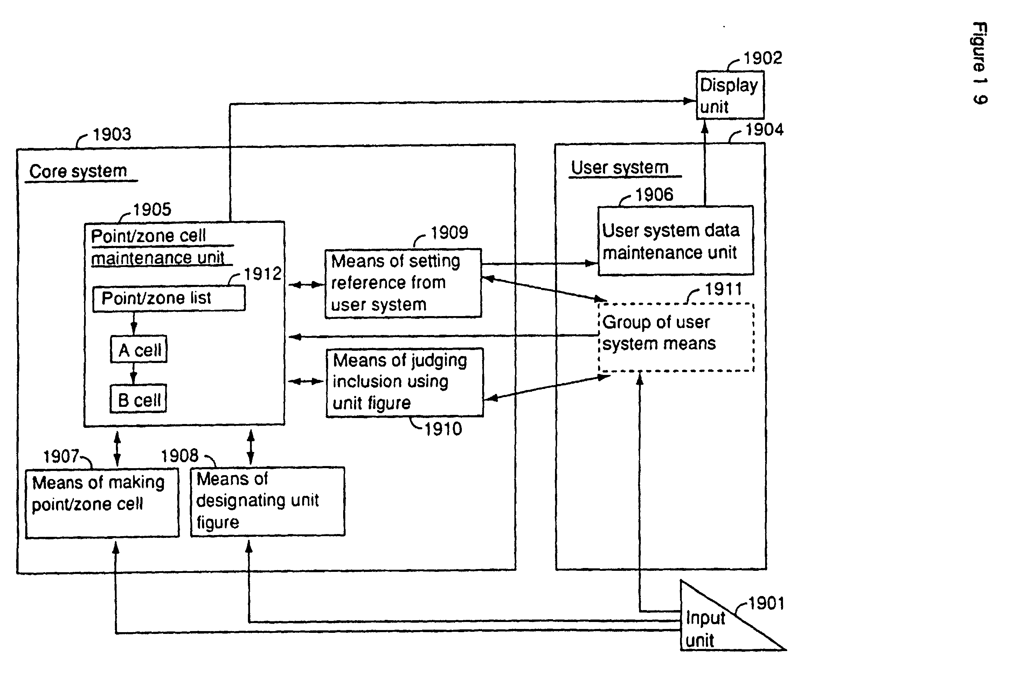

Figure 13 is an embodiment of the process to investigate a group relation. Figure 14 is the first structural example of the program that realized the method of managing point and zone data. Figure 15 is an embodiment of the process of designating a unit figure. Figure 16 is an embodiment of the process of judging the inclusion of unit figures. Figure 17 is the second structural example of the program that realized the method of managing point and zone data. This program manages inclusions using the unit figures of point/zone cells. Figure 18 is an embodiment of apparatus, which corresponds to the method of managing point and zone data of figure 14. Figure 19 is an embodiment of apparatus, which corresponds to the method of managing point and zone data of figure 17.

### THE BEST MODE FOR CARRYING OUT THE INVENTION

### Section 9 Mode of Executing the Method of Managing Point and Zone Data

One way of executing the method of managing point and zone data is to realize it as a program of a computer. Figure 7 shows a common composition of a computer. The point and zone data inputted from the input unit 701 is analyzed in the central process unit 703 and recorded in the main memory unit 704. By these data, the core system is constructed in the main memory unit 704. Situations of this process are shown in the display unit 702 at any time. Operator judges and puts more instructions or data from the input unit 701.

Data of and instructions to the user system inputted from the input unit 701 are analyzed in the central process unit 703 and recorded in the main memory unit 704. By these data and instructions, reference to a point/zone cell is set. The situations of this process are shown in the display unit 702 at any time. Operator judges and puts more instructions or data from the input unit 701.

The data of the main memory unit 704 is recorded in the secondary memory unit 705, and is read-in during the re-starting the system.

With the composition of the computer in figure 7, the difference between the core system and the user system cannot be explained. This is because the core system and the user system are logically separated as a composition of a program that runs in this computer. Details will be explained in the first structural example of a program in Section 9.7 and the second structural example of a program in Section 9.10.

### Section 9.1 Process of Making a Point/Zone Cell

An embodiment of the process of making a point/zone cell is shown in figure 8. First, "hunt an unused data block" 803 inside the main memory unit 704. This means to hunt memory by the command "new" or "malloc", if language C++ or C is used. Next, "write the name of the place or the zone in the point/zone cell" 802. This is an example of use name of a place or a zone as cell identifier of a point/zone cell. In figure 2, the character string "Japan" is written in as the cell identifier in Japan cell 201. Lastly, "accommodate the point/zone cell into the 'point/zone list,' which accommodates the point/zone cell" 803. Here, an embodiment of the accommodation of the point/zone cell into the list is supposed. (Refer to Section 4.2)

### Section 9.2 Process of Setting Reference from the User System

An embodiment of the process of setting reference from the user system to a point/zone model inside the core system is shown in figure 9. First, "accept the cell identifier" 901. The operator can directly input the name of the place or the zone. It is possible to designate point/zone cell by operator. The cell identifier of this point/zone cell can be used. Next, "write the cell identifier in the user system." In the example of figure 1, write the character string "Japan", that is the cell identifier of the Japan cell, into service-supplying zone 109 of user system 105. Also, write the character string "Tokyo", that is the cell identifier of the Tokyo cell, into the communication base A 111 of the model of the communications network 110. As shown in Section 4.2, if the list accommodates the point/zone cell, the intended point/zone cell can be specified from these character strings (Japan or Tokyo.)

### Section 9.3 Process of Setting Reference among Point/Zone Cells

An embodiment of setting reference among point/zone cells is shown in figure 10. This process will be explained by using the case of setting reference from Japan cell 201 to Tokyo cell 202. First, "accept a designation of the referenced point/zone cell" 1001. Tokyo cell 202 applies to this Then, "fetch cell identifier" 1002 of the cell. In other words, fetch the character string "Toko." The cell identifier of this embodiment is the name of a place or a zone. From "accept a designation of referencing the point/zone cell" 1003, the designation of Japan cell 201 is accepted. From "accept the designation of the relation represented by the reference" 1004, the character string "direct inclusion" is designated. In this embodiment, it is assumed that a designation of a relation represented by a reference is given by such character strings "direct inclusion," "adjacent relation," and "group relation." Lastly, "write the referenced cell identifier and the data designating the meaning of the reference into the point/zone cell" 1005. In the example of figure 2, the character string "direct inclusion" which shows the relation representing reference, and the character string "Tokyo" which is the Tokyo cell identifier are written in Japan cell 201.

When the core system handles one kind of relation, the process "accept the designation of the relation represented by the reference" 1004 can be skipped.

### Section 9.4 Process to investigate inclusion

An embodiment of the process to investigate inclusion is shown in figure 11. This process is explained by using figure 2. First, "accept a designation of the including point/zone cell" 1001. This is Japan cell 202 of figure 2. Next, "accept a designation of the included point/zone cell" 1102. This is Shinjuku ATL Company building cell 204. Check "direct inclusion" 1103 among them. The result is NO since the direct inclusion of Japan cell 201 is set to Tokyo cell 202. Next, "fetch point/zone cells directly included by the including point/zone cell in order" 1104. Then "set the fetched point/zone as new including point/zone cells, and invoke the process to investigate inclusion" 1106. That is, set the Tokyo cell 202 as the including point/zone cell, still set the ATL Company building cell 204 as the included point/zone, and re-invoke the process to investigate inclusion. This manner, that is to invoke the same procedure (function) from the procedure (function), is called to invoke recursive procedure. It can be realize by a lisp, language C, C++, etc.

In this manner, trace Japan cell 201, Tokyo cell 202, Otemachi cell 205 as the including point/zone cells. Since there is no designation of a direct inclusion in Otemachi cell 205, the judgement whether "is there a directly included point/zone cell?" 1105 is "NO," and "report 'does not included' to the caller."1109. This report is passed to the caller in the reverse order of recursive process. This report is judged by the step to check whether it is a "report of 'does include'?" 1107. And a step to "fetch point/zone cells directly included by the including point/zone cell in order" 1104 is carried out for the Tokyo cell. Shinjuku cell 203 is fetched next.

Then, "set the fetched point/zone cells as new including point/zone cells and invoke the process to investigate inclusion" 1106. That is to invoke the process to investigate inclusion again, setting Shinjuku cell 203 as the including point/zone cell and still setting the Shinjuku ATL Company building cell 204 as making included point/zone cell. Since there is a direct inclusion between them, the process of "report 'does include' to the caller" 1108 is carried out. This report is passed to the caller in the reverse order of recursive process and to the process that first invoked the process to investigate inclusion.

Thus, the answer to "Does Japan cell 201 include Shinjuku ATL Company building cell 204?" is "Does include."

### Section 9.5 Process to Investigate an Adjacent Relation

An embodiment of the process to investigate an adjacent relation is shown in figure 12. Also, figure 4 is used to explain this process. First, "accept designations of the point/zone cells to be investigated" 1201. Here, it is assumed that X cell 404 and Y cell 405 are designated. Next, "judge whether there is an adjacent relation set between them" 1201. Since Y, which is the cell identifier of Y cell 405, is designated as the adjacent relation of X cell 404, the result of "adjacent?" 1203 is YES. Thus, "report 'are adjacent' to the caller" 1204 is carried out.

In other words, the answer to "are X cell 404 and Y cell 405 adjacent?" is "are adjacent." If the result of "adjacent?" 1203 is NO, "report 'are not adjacent' to the caller" 1205 is carried out.

### Section 9.6 Process to investigate a group relation

An embodiment of the process to investigate a group relation is shown in figure 13. Also, figure 5 is used to explain this process. First, "accept designations of the point/zone cells to be investigated" 1301. Here, it is assumed that R cell 506 and T cell 508 are designated. Next, "judge whether the point/zone cells to be investigated are connected by succession of group relations" 1302 is carried out. Indeed, we can trace R Cell 506, S cell 507 and T cell 508 by group relations. Also, a group relation directly traces R cell 506 from cell T 508. No matter which successions of relations are traced, the result of "connected?" 1303 is YES. Thus, "report 'group relation exists' to the caller" 1304 is carried out.

In other words, the answer to "are R cell 506 and T cell 508 a group?" is "group relation exists." If the result of "connected?" 1303 is NO, "report 'group relation does not exist' to the caller" 1305 is carried out.

### Section 9.7 First Structural Example of Program

Figure 14 shows the first structural example of a program realizing a method of managing a point and a zone on the computer, which is shown in figure 7 and explained in the beginning of section 9. This is an example as an event driven program. Analyze the signal from the input unit 701 by the "reception process of events to invoke processes" 1401, and invoke the corresponding process. There are also cases where events of invoking the processes come out from these processes. The "reception process of events to invoke processes" 1401 also analyzes them and invokes the corresponding process.

Some of the processes being invoked are as follows. The "process of making a point/zone cell" 1402 explained in Section 9.1. The "process of setting reference from the user system" 1403 explained in Section 9.2. The "process of setting reference among point/zone cells" 1404 explained in Section 9.3. The "process to investigate inclusion" 1405 explained in Section 9.4. The "process to investigate an adjacent relation" 1406 explained in Section 9.5. And the "process to investigate a group relation" 1407 explained in Section 9.6.

The above are the group of processes of the core system. The core system is composed in the main memory unit 704 of these processes and the list accommodating point/zones. A part (or all) of the core system can be placed in the secondary memory unit 705.

Besides them, there is the "group of user system processes" 1408. The details are omitted since they differ with each user system. Although the user system is also constructed in the memory unit 704 or the secondary memory unit 705, it is logically separated from the core system. The embodiment of the "process of setting reference from the user system" 1403 can be in the group of processes of the user system.

Furthermore, it is possible to place the core system and the user system in a different computer connected by a communication circuit.

The references among point/zone cells made by "process of making a point/zone cell" 1402 are set by the "process of setting reference among point/zone cells" 1404. These references represent an inclusion, an adjacent. relation, and a group relation. And, the reference from the user system is set by the "process of setting reference from the user system" 1403. The user system can obtain the information of these relations by invoking the "process to investigate inclusion" 1405, designating including point/zone cells and included point/zone cell. The information of these relations also can be obtained by invoking the following processes. The "process to investigate inclusion" 1405. The "process to investigate an adjacent relation" 1406. And the "process to investigate a group relation" 1407

### Section 9.8 Process of Designating a Unit Figure

Suppose that there is only one kind of unit figure, that is a square, and designated it to each point/zone cell. And suppose that the XY-coordinates of the center of the square, and the length of a side are designated to each point/zone cell. With these assumptions, an example of the process of designating a unit figure is shown in figure 15.

First, "accept designation of a point/zone cell" 1501. Then, "accept the XY-coordinates of center of the square" 1502. The XY-coordinates can be longitude and latitude, as shown in the example in figure 6, or they can be specific coordinates convenient for the user system. Next, "accept the length of a side of the square" 1503. When it is not designated, the default value o may be used. Lastly, write the XY-coordinates of the center of the square and the length of a side into the designated point/zone cell".

### Section 9.9 Process of Judging an Inclusion Using a Unit Figure

When unit figures are introduced, the inclusion of point/zone cells can be replaced by the inclusion of designated unit figures. There are numerous methods of judging the inclusion of unit figures.

When the including unit figure is V and the included unit figure is W, numerous definitions of V and W including each other are possible as shown below. (1) V includes the center of W. (2) V includes some portion (this ratio can be designated separately) of W. (3) V includes All of W. Here, the example using (I) is shown in figure 16. Here as in Section 9.8, supposed that each point/zone cell has one unit figure, a square, and that the XY-coordinates of the square and the length of a side are designated to each point/zone cell.

First, "accept designation of including point/zone cell" 1601. From this, the data of the including unit figure, the XY-coordinates of the center of the square (x1, y1) and the length of a side (r) can be acquired. Next, "accept designation of the included unit figure" 1602. From this, the XY-coordinates of the center of the square (x2, y2) of the included unit figure can be acquired. The step to "investigate inclusion of unit figures" 1603 is to judge whether the center is included by the including square. When x1-r/2≦x2≦x1+r/2 and y1-r/2≦y2≦y1+r/2are satisfied, it is judged as "included" 1604, and "report 'does include' to the caller" 1605 is carried out. If it is not "included" 1604, "report 'does not include' to the caller" 1606 is carried out.

### Section 9.10 Second Structural Example of a Program

Figure 17 shows the second structural example of a program realizing a method of managing a point and a zone on the computer, which is shown in figure 7 and explained in the beginning of section 9. This program manages an inclusion by using a unit figure of a point/zone cell. This is also an example of a event driven program. The signal from the input unit 701 is analyzed by the "reception process of events to invoke processes" 1701, and the corresponding process is invoked. There are also cases where events of invoking the processes come out from these processes. The "reception process of events to invoke processes" 1701 also analyzes them in the same way and invokes the corresponding process.

Some of the processes being invoked are as follows. The "process of making a point/zone cell" 1702 explained in Section 9.1. The "process of setting reference from the user system" 1703 explained in Section 9.2. The "process of designating a unit figure" 1704 explained in Section 9.8. And the "process of judging an inclusion using a unit figure" 1705 explained in Section 9.9.

The above are the group of processes of the core system. The core system is composed in the main memory unit 704 of these processes and the list accommodating point/zones. A part (or all) of the core system can be placed in the secondary memory unit 705.

Besides them, there is the "group of user system processes" 1706. The details are omitted since they differ with each user system. Although the user system is also constructed in the memory unit 704 or the secondary memory unit 705, it is logically separated from the core system. The embodiment of the "process of setting reference from the user system" 1703 can be in the group of processes of the user system.

Furthermore, it is possible to place the core system and the user system in a different computer connected by a communication circuit.

The data of a unit figure acquired by the "process of designating a unit figure" 1704 is given to the point/zone cell made by the "process of making a point/zone cell" 1702. Then, the reference from the user system is set by the "process of setting reference from the user system" 1703. The user system can acquired the information of "does include" or "does not include", by invoking the "process of judging an inclusion using a unit figure" 1705 designating the including point/zone cell and the included point/zone cell.

### Section 10 Example of Realizing the Apparatus Managing Point and Zone Data

### Section 10.1 First Example of Realizing the Apparatus Managing Point and Zone Data

Figure 18 shows an embodiment of the apparatus that applies to the example of a program realizing a method of managing a point and a zone, which is shown in Section 9.7 of the first structural example of program. There were processes in Section 9.7 as follows. The "process of making a point/zone cell" 1402. The "process of setting reference from the user system" 1403. The "process of setting reference among point/zone cells" 1404. The "process to investigate inclusion" 1405. The "process to investigate an adjacent relation" 1406. And the "process to investigate a group relation" 1407. They can be realized by hardware such as the microprocessors, as follows. The "means of making a point/zone cell" 1807. The "means of setting reference from the user system" 1809. The "means of setting reference among point/zone cells" 1808. The "means of investigating an inclusion" 1810. The "means of investigating an adjacent relation" 1811. And the "means of investigating a group relation" 1812.

The core system 1803 is composed by the above mentioned means and the point/zone cell maintenance unit 1805. The point/zone cell made by the "means of making a point/zone cell" 1807, is accommodated in (the point and zone list 1814 of) the point/zone cell maintenance unit 1805 by a signal from the input unit 1801. By the "means of setting reference among point/zone cells" 1808 invoked by the signal from the input unit 1801, a reference is set among the point/zone cells accommodated in the point/zone cell maintenance unit 1805. The contents of the "point/zone cell maintenance unit" 1805 are displayed in the "display unit" 1802 at any time.

The user system 1804 is composed by the "user system data maintenance unit" 1806, and the "group of the user system means" 1813. The contents of the "user system data maintenance unit" 1806 are displayed in the "display unit" 1802 at any time. When setting reference from the user system 1804 to a point/zone cell, an invoking signal is sent from the "group of means of the user system" 1813 to the "means of setting reference from the user system" 1809. At this situation, (the user system) accesses to the point/zone cell maintenance unit in order to designate a point/zone cell. As a result, the cell identifier of the designated point/zone cell is set in the "user system data maintenance unit" 1806. Also, the result (OK or NG) is reported to the caller.

When investigating an inclusion, an adjacent relation, or a group relation, an invoking signal is sent from a means of the "group of means of the user system" 1818 to "the means of searching an inclusion" 1810, "the means of searching an adjacent relation" 1811, and "the means of searching a group relation" 1812. At this point, (the user system) accesses to the point/zone cell maintenance unit in order to designate a point/zone cell. As a result, "does include or does not include," "is adjacent or is not adjacent," "group relation exists or group relation does not exist" are reported to the caller.

### Section 10.2 Second Example of Realizing an Apparatus Managing Point and Zone Data

Figure 19 shows an embodiment of the apparatus that applies to the example of a program realizing a method of managing a point and a zone, which is shown in Section 9.10 of the second structural example of program. There were processes in Section 9.10 as follows. The "process of making a point/zone cell" 1702. The "process of setting reference from the user system" 1703. The "process of designating a unit figure" 1704. And the "process of judging an inclusion using a unit figure" .1705. They can be realized by hardware such as the microprocessors, as follows. The "means of making a point/zone cell" 1907. The "means of setting reference from the user system" 1909. The "means of designating a unit figure" 1908. And the "means of judging an inclusion using a unit figure" 1910.

The core system 1903 is composed by the above mentioned means and the "point/zone cell maintenance unit" 1905. The point/zone cell made by the "means of making a point/zone cell" 1907, is accommodated in (the point and zone list 1912 of) the point/zone cell maintenance unit 1905 by a signal from the input unit 1901. By the "means of designating a unit figure" 1908 invoked by the signal from the input unit 1901, the data of the unit figure are set in the "point/zone cell maintenance unit" (1905). The contents of the "point/zone cell maintenance unit" 1905 are displayed in the "display unit" (1902) at any times.

The user system 1904 is composed by the "user system data maintenance unit" 1906, and the "group of means of the user system" 1911. The contents of the "user system data maintenance unit" 1906 are displayed in the "display unit" 1902 at any times. When setting reference from the user system to a point/zone cell, an invoking signal is sent from the "group of means of the user system" 1911 to the "means of setting reference from the user system" 1909. At this point, (the user system) accesses into the point/zone cell maintenance unit in order to designate a point/zone cell. As a result, the cell identifier of the designated point/zone cell is set in the "user system data maintenance unit" 1906. Also, the result (OK or NG) is reported to the caller.

When searching an inclusion, an invoking signal is sent from a means of the "group of means of the user system" 1911 to the "means of judging an inclusion using a unit figure" 1910. At this point, access into the point/zone cell maintenance unit in order to designate a point/zone cell. The result, "does include or does not include" is reported to the caller.

### INDUSTRIAL APPLICABILITY

### Section 11 Industrial Applicability

The method and apparatus for managing point and zone data of this invention can he used by various systems utilizing point and zone data. especially the data of its relations. This descriptions has mainly explained the mechanism and shown the effects of the method and apparatus for managing point and zone data by using examples of systems which make a model of a communications networks, in other words, a plan of a communications network. This can also be applied to other systems and still have the same effects.

The method and apparatus for managing point and zone data of this invention can limit the influence to the data user to the minimum, even when adding and modifying the point and zone data. Therefore, in the initial evaluation of using the user system, it became possible to vaguely designate the point and zone data and then to designate the point and zone data more concretely along with the progress of the evaluation. Since it is difficult to prepare the complete data of point and zone from the initial evaluation, this invention is quite useful.

Also, this invention represents the relations of points and zones by the references among point/zone cells. Actual examples of the relation are an inclusion, an adjacent relation, and a group relation. This invention is useful for systems to handle such relations as well as other relations of a point or a zone.

## Claims

1. Apparatus using a geographical data with a point/zone cell of either 0-dimensional data of point or 2-dimensional data of zone (Section 4.1), the apparatus comprising;
[A] a point/zone cell maintenance unit (1805) to accommodate a point/zone cell, and
[Bm] means (1807) to create (801) said point/zone cell (201), and
[Cm] means (1809) to set (902) a reference to said point/zone cell (106), and
[Dm] means (1808) to set (1005) a reference among said point/zone cells (201, 202), and
[Em] means (1810, 1811, 1812) to check (1107, 1203, 1303) relations among said point/zone cells (201, 204).

2. Apparatus using geographical data according to claim 1, further comprising [Fm] means to change (page 5, lines 9-11) data of said point/zone cell.

3. Apparatus using geographical data according to claim 2, further comprising a user system (1804) setting (902, 1813) a reference to said point/zone cell (201) from a user system data (1806).

4. Apparatus using geographical data according to claim 3, wherein said user system (1804) is setting (902, 1813) reference to said point/zone cell (201) from a communication network model (1806).

5. Apparatus using geographical data according to claim 3, wherein said user system (1804) accesses means [Cm] to set a reference to said point/zone cell and said means [Em] to check relations during making or changing user system data (1806).

6. Method using geographical data with a point/zone cell of either 0-dimensional data of point or 2-dimensional data of zone, the method comprising:
[Bp] a process (1402) to create (801) said point/zone cell (201), and to add or modify data of said point/zone cell, and
[Cp] a process (1403) to set (902) a reference to said point/zone cell (106), and
[Dp] a process (1404) to set (1005) a reference among said point/zone cells (201, 202), and
[Ep] a process (1405, 1406, 1407) to check (1107, 1203, 1303) relations among said point/zone cells (201, 204).

7. Method using geographical data according to claim 6, further comprising [Fp] a process to change data of said point/zone cell.

8. Method using geographical data according to claim 7, further comprising a user process (1408) to set (902, 1403) a reference to said point/zone cell from a user system data (1806).

9. Method using geographical data according to claim 8, wherein said user process (1408) sets (902, 1403) a reference to said point/zone cells from a communication network model (1806).

10. Method using geographical data according to claim 8, wherein said user process (1408) invokes the process [Cp] to set a reference to said point/zone cell and the process [Ep] to check relations while making or changing said user system data (1806).

## Patentansprüche

1. Vorrichtung, die geographische Datcn mit einer Punkt-/Zonenzelle von entweder 0-dimensionalen Daten eines Punktes oder 2-dimensionalen Daten einer Zone (Sektion 4.1) verwendet, wobei die Vorrichtung folgendes aufweist:
[A] eine Punkt-/Zonenzellen- Aufrechterhaltungseinhcit (1805), um eine Punkt/Zonenzelle aufzunchmen, und
[Bm] Einrichtungen (1807), um die Punkt/Zonenzelle (201) zu erzeugen (801), und
[Cm] Einrichtungen (1809), um eine Referenz zu der Punkt-/Zonenzelle (106) zu setzen (902), und
[Dm] Einrichtungen (1808), um einc Referenz unter den Punkt-/Zonenzellen (201, 202) zu setzen (1005), und
[Em] Einrichtungen (1810, 1811, 1812), um Bezichungen unter den Punkt-/Zonenzellen (201, 204) zu überprüfen (1107, 1203, 1303).

2. Vorrichtung, die geographische Daten verwendet, gemäß Patentanspruch 1, die ferner [Fm] Einrichtungen zum Ändern (S.5, Z. 9-11) von Daten der Punkt-/Zonenzelle aufweist.

3. Vorrichtung, die geographische Daten verwendet, gemäß Patentanspruch 2, die ferner ein Anwendersystem (1804) aufweist, das eine Referenz zu der Punkt-/Zonenzelle (201) von Benutzersystemdaten (1806) setzt (902, 1813).

4. Vorrichtung, die geographische Daten verwendet, gemäß Patentanspruch 3, wobei das Anwendersystem (1804) die Referenz zu der Punkt/Zoncnzelle (201) von einem Kommunikationsnetzwerkmodel (1806) setzt (902, 1813).

5. Vorrichtung, die geographische Daten verwendet, gemäß Patentanspruch 3 verwendet, wobei das Anwendersystem (1804), Einrichtungen [Cm] zum Setzen einer Referenz zu der Punkt-/Zonenzelle und der Einrichtung [Em] zum Überprüfen der Beziehungen während des Erstellens oder Änderns der Benutzcrsystemdaten (1806) zugänglich macht.

6. Verfahren das geographische Daten mit einer Punkt-/Zonenzelle von entweder O-dimensionalen Daten eines Punktes oder 2-dimensionalen Daten einer Zone verwendet, wobei das Verfahren folgendes aufweist:
[Bp] einen Prozeß (1402) zum Erzeugen (801) der Punkt-/Zonenzelle (201), und zum Addieren oder Modifizieren von Daten der Punkt-/Zonenzelle
[Cp] einen Prozeß (1403) zum Setzen (902) einer Referenz zu der Punkt-/Zonenzelle (106), und
[Dp] einen Prozeß (1404) zum Setzen (1005) einer Referenz unter den Punkt-/Zonenzellen (201, 202), und
[Ep] einen Prozeß (1405, 1406, 1407) zum Überprüfen (1107, 1203, 1303) der Beziehungen unter den Punkt-/Zonenzellen (201, 204).

7. Verfahren, das geographischc Daten gemäß Patentanspruch 6 verwendet, welches ferner [Fp] einen Prozeß zum Ändern der Daten der Punkt-/Zonenzelle aufweist.

8. Verfahren, das geographische Daten nach Patentanspruch 7 verwendet, welches ferner einen Benutzerprozeß (1408) zum Setzen (902, 1403) einer Referenz zu der Punkt-/Zonenzelle von Benutzersystemdaten (1806) aufweist.

9. Verfahren, das geographische Daten nach Patentanspruch 8 verwendet, wobei der Benutzerprozeß (1408) eine Referenz zu der Punkt-/Zonenzelle von einem Kommunikationsnetzwerkmodel (1806) setzt (902, 1403).

10. Verfahren, das geographische Daten gemäß Patentanspruch 8 verwendet, wobei der Benutzerprozeß (1408) den Prozeß [Cp] aufruft, um eine Referenz zu der Punkt-/Zonenzelle zu setzen, und den Prozeß [Ep], um die Bezichungen während des Erzeugens und Änderns der Benutzersystemdaten (1806) zu überprüfen.

## Revendications

1. Dispositif utilisant des données géographiques avec une cellule point/zone de données de point de dimension zéro, ou de données de zone à deux dimensions (section 4.1), le dispositif comprenant :
[A] une unité de maintien de cellule point/zone (1805) pour recevoir une cellule point/zone, et
[Bm] des moyens (1807) pour créer (801) ladite cellule point/zone (201), et
[Cm] des moyens (1809) pour déterminer (902) une référence pour ladite cellule point/zone (106), et
[Dm] des moyens (1808) pour déterminer (1005) une référence parmi lesdites cellules point/zone (201, 202), et
[Em] des moyens (1810, 1811, 1812) pour vérifier (1107, 1203, 1303) des relations parmi lesdites cellules de point/zone (201, 204).

2. Dispositif utilisant des données géographiques selon la revendication 1, comprenant en outre [Fm] des moyens pour varier (page 5, lignes 9-11) des données de ladite cellule point/zone.

3. Dispositif utilisant des données géographiques selon la revendication 2, comprenant en outre un système utilisateur (1804) déterminant (902, 1813) une référence de ladite cellule point/zone (201) à partir des données d'un système utilisateur (1806).

4. Dispositif utilisant des données géographiques selon la revendication 3, dans lequel ledit système utilisateur (1804) détermine (902, 1813) une référence pour ladite cellule point/zone (201) à partir d'un modèle de réseaux de communication (1806).

5. Dispositif utilisant des données géographiques selon la revendication 3, dans lequel ledit système utilisateur (1804) accède à des moyens [Cm], pour déterminer une référence pour ladite cellule point/zone, et accède à desdits moyens [Em], pour vérifier les relations lors de la création ou la variation des données du système utilisateur (1806).

6. Procédé utilisant des données géographiques avec une cellule point/zone de données de point de dimension zéro, ou de données de zone à deux dimensions, le procédé comprenant :
[Bp] une étape (1402) pour créer (801) ladite cellule point/zone (201), et pour ajouter ou modifier des données de ladite cellule point/zone, et
[Cp] une étape (1403) pour déterminer (902) une référence pour ladite cellule point/zone (106), et
[Dp] une étape (1404) pour déterminer (1005) une référence parmi lesdites cellules point/zone (201, 202), et
[Ep] une étape (1405, 1406, 1407) pour vérifier (1107, 1203, 1303) les relations parmi lesdites cellules point/zone (201, 204).

7. Procédé utilisant des données géographiques selon la revendication 6, comprenant en outre [Fp] une étape pour varier les données de ladite cellule point/zone.

8. Procédé utilisant des données géographiques selon la revendication 7, comprenant en outre une étape utilisateur (1408) pour déterminer (902, 1403) une référence de ladite cellule point/zone à partir des données d'un système utilisateur (1806).

9. Procédé utilisant des données géographiques selon la revendication 8, dans lequel ladite étape utilisateur (1408) détermine (902, 1403) une référence pour lesdites cellules point/zone à partir d'un modèle de réseaux de communication (1806).

10. Procédé utilisant des données géographiques selon la revendication 8, dans lequel ladite étape utilisateur (1408) appelle l'étape [Cp] pour déterminer une référence pour ladite cellule point/zone, et appelle l'étape [Ep] pour vérifier les relations lors de la création ou la variation desdites données de système utilisateur (1806).
